# EUROPÄISCHE PATENTSCHRIFT

(11) **EP 3 404 442 B1**
(45) Veröffentlichungstag und Bekanntmachung des Hinweises auf die Patenterteilung: **07.07.2021**
(21) Anmeldenummer: 18173074.8
(22) Anmeldetag: 18.05.2018
(51) Int. Cl.: G01S 7/497, G01S 17/42

(54) **SIMULATIONSVORRICHTUNG FÜR EIN ROTIERENDES LIDAR-LICHTMESSSYSTEM**
SIMULATION DEVICE FOR A ROTATING LIDAR LIGHT MEASUREMENT SYSTEM
DISPOSITIF DE SIMULATION POUR UN SYSTÈME DE MESURE PAR LASER ROTATIF

(30) Priorität: 18.05.2017 DE 102017110794
(43) Veröffentlichungstag der Anmeldung: 21.11.2018
(73) Patentinhaber: KONRAD GmbH, DE-78315 Radolfzell (DE)
(72) Erfinder: KONRAD, Michael, 78315 Radolfzell (DE)
(74) Vertreter: Patentanwälte und Rechtsanwalt Weiß, Arat & Partner mbB

(56) Entgegenhaltungen:
- EP-A1- 0 601 872
- DE-A1-102007 057 372
- DE-C1- 3 908 273

## Beschreibung

### Technisches Gebiet

Die Erfindung betrifft ein Simulationsvorrichtung nach dem Oberbegriff des Anspruchs 1 und ein Verfahren nach Anspruch 11.

### Stand der Technik

Aus dem Stand der Technik wird auf die DE 39 08 273 C1 verwiesen. Dort ist eine Selbsttesteinrichtung für einen scannenden Lichttaster offenbart, bei der im Scanbereich des Lichttasters wenigstens unter einem Scanwinkel ein Testlicht-Sender, der unter der entsprechenden Winkelstellung den Lichtempfänger mit Licht beaufschlagt, unter einem zweiten Scanwinkel ein Absorber, der das Licht des Lichtsenders des Lichttasters absorbiert und ggf. durch einen Rechner ein Fehlersignal ausgegeben wird.

Weiterhin wird auf die DE 10 2007 057 372 A1 hingewiesen, welche ein Testsystem für Lidarsensoren mit einer Triggereinheit offenbart, durch welche als Reaktion auf den Empfang eines Signals eines zu testenden Lidarsensors ein Signalgenerator derart angesteuert wird, dass durch eine Signalerzeugungseinheit des Signalgenerators ein vorgegebenes synthetisch erzeugtes oder aufgezeichnetes optisches Signal ausgegeben wird.

Der Vollständigkeit halber wird ausserdem auf die EP 0 601 872 A1 hingewiesen, wobei die Erfindung es ermöglichen soll, Laserentfernungsmesser ohne die Notwendigkeit einer großen Entfernung (typischerweise im Freien) zu testen.

LiDAR (Abkürzung für Light detection and ranging) Lichtmesssysteme werden neben weiteren Anwendungen zur optischen Abstands- und

Geschwindigkeitsmessung eingesetzt. LiDAR-Lichtmesssysteme senden Licht aus und messen die Laufzeit, in der das Licht nach der Reflexion an einem Objekt wieder zum LiDAR-Lichtmesssystem zurückkommt. Aus der bekannten Geschwindigkeit des Lichts folgt die Entfernung des Objekts vom LiDAR-Lichtmesssystem. Je nach Auslegung eines LiDAR-Lichtmesssystems sind Entfernungsmessungen im Bereich von wenigen Zentimetern bis zu mehreren Hunderttausend Kilometern möglich.

Wichtige Anwendungsbereiche für LiDAR-Lichtmesssysteme besitzen einen Messbereich für den Abstand von etwa 1 m bis zu wenigen 100 m. Beispiele dieser Anwendungsbereiche sind mobile Instrumente zur optischen Entfernungsmessung und LiDAR-Lichtmesssysteme für das Anwendungsfeld Automotive, nämlich Fahrerassistenzsysteme und autonomes Fahren.

Für den Test von LiDAR-Lichtmesssystemen, beispielsweise in der industriellen Qualitätskontrolle, wird eine Methode benötigt, Messungen bei definierten Entfernungen durchzuführen. Dazu werden im einfachsten Fall Messstrecken dieser definierten Längen benötigt. Für Qualitätskontrollen werden ebenfalls definierte Umgebungsbedingungen bezüglich Umwelt, wie Temperatur, Feuchte und Fremdlicht entlang der Messstrecke sowie definierte optische Eigenschaften des Messobjekts benötigt. Die Einhaltung der Umgebungsbedingungen stellt einen erheblichen Anspruch an den Platzbedarf für Messstrecken. Teststrecken für Entfernungen über etwa 10 m Länge sind deshalb aufwändig zu realisieren.

Ist das LiDAR-Lichtmesssysteme mit mehreren Kanälen ausgestattet, die, analog einer herkömmlichen Kamera, ein Bild mit einem Öffnungswinkel aufnehmen, so erhöht sich der Platzbedarf im Vergleich zum linearen Entfernungsmesssystem. Für einen LiDAR-Lichtempfangssensor mit einem horizontalen Öffnungswinkel von 360°, einem vertikalen Öffnungswinkel von 45° und einer maximalen Messdistanz von 100 m wird ein Messplatz von 200 m Durchmesser und einer Höhe von 83 m benötigt.

Neben dem einfachen Test von LiDAR-Lichtmesssystemen bei festen Entfernungen besteht der Anspruch an ein Testsystem darin, eine bewegte Szenerie bereitzustellen. Dies ist insbesondere notwendig, um in der Applikationsentwicklung LiDAR-Sensoren zu testen. Um beispielsweise das Verhalten von LiDAR-Lichtmesssystemen in der Anwendung autonomes Fahren zu testen, müssen Fahrten durchgeführt werden wobei Sensordaten aufgenommen werden. Dann kann aber nur diese Szenerie der durchgeführten Fahrt getestet werden. Änderungen, die beispielsweise in der Entwicklung der Applikation notwendig sind, bedingen eine neue Messfahrt.

### Aufgabe der Erfindung

Die Aufgabe der vorliegenden Erfindung ist es, die Nachteile aus dem Stand der Technik zu überwinden. Insbesondere soll eine Simulationsvorrichtung bereitgestellt werden, die kostengünstig die Funktions- und Qualitätskontrolle ermöglicht und dabei zu einer Zeitersparnis führen soll.

### Lösung der Aufgabe

Zur Lösung der Aufgabe führen die Merkmale nach dem Anspruch 1 und 8.

Vorteilhafte Ausgestaltungen sind in den Unteransprüchen beschrieben.

Die Erfindung erlaubt es, dem LiDAR-Lichtmesssystem jede beliebige bewegte Szenerie zu präsentieren. Anstelle des bei einer Messstrecke vom Messobjekt zum Sensor zurückkommenden zeitverzögerten Lichtsignals wird das zeitverzögerte Lichtsignal über eine einstellbare Verzögerungsstrecke generiert.

Das vom LiDAR-Lichtmesssystem ausgesandte Lichtsignal wird mit einem Photodetektor detektiert und die weitere Ausbreitung beispielsweise durch eine Lichtfalle abgeblockt. Der Zeitpunkt der Detektion des von LiDAR-Lichtmesssystem ausgehenden Lichtsignals wird als Triggerzeitpunkt für die Erzeugung des zeitverzögerten Signals verwendet.

Ein mit Bezug zum Trigger zeitverzögertes Signal wird generiert. In der Erfindung kann die Zeitverzögerung ausgehend von einer durch die Elektronik bedingten Minimalverzögerung beliebig eingestellt und verändert werden. Die Erzeugung des zeitverzögerten Signals geschieht mittels einer elektronischen Zeitverzögerungseinheit. Die Änderung der Zeitverzögerung erfolgt ebenfalls elektronisch und ist vorzugsweise in einem Bereich von >10 s-1. Das zeitverzögerte Signal wird zur Erzeugung eines Lichtsignals mittels eines geeigneten schnellen Verstärkers verwendet.

Das so erzeugte Lichtsignal wird auf das LiDAR-Lichtmesssystem geleitet und von diesem als Objekt in der Entfernung entsprechend der Verzögerungszeit interpretiert.

Für jeden Kanal des LiDAR-Lichtmesssystems gibt es eine solche von den anderen Kanälen unabhängige Signalkette. Dadurch ist es möglich für das LiDAR-System eine simulierte bewegte Umgebung zu generieren.
- Erzeugung von veränderbaren zeitverzögerten Signalen die einer bewegten 1 bis 3 dimensionalen Szene entsprechen, welche zur Laufzeit synchron an die Szenerie angepasst werden.
- Skalierbarkeit in der Kanalanzahl von einem Kanal bis zur Auflösung des verwendeten Optischen Systems zur Entfernungsmessung
- Skalierbarkeit in Entfernung ausgehend von einem Mindestabstand der begrenzt ist durch die Reaktionsgeschwindigkeit der verwendeten elektronischen Komponenten zur Detektion von Lichtimpulsen über die Zeitverzögerungsglieder bis zur Lichterzeugung bis hin zum maximalen Erfassungsbereiches des optischen Systems.
- Insbesondere für den Einsatz im zeitsynchronen Verbund von mehreren unterschiedlichen Sensor Simulatoren zur Visualisierung von virtuellen Realitäten.
- Insbesondere für den Bereich von ADAS (Advanced driver assistance systems)
- Einstellbarkeit einer statischen Zeitverzögerung welcher einer statischen Entfernung entspricht.

Eine erfindungsgemässe Simulationsvorrichtung für ein rotierendes LiDAR-Lichtmesssystem mit einem LiDAR - Lichtempfangssensor ist derart ausgeführt, dass der LiDAR- Lichtempfangssensor 360° um eine Achse rotiert, um beispielsweise in fahrerlosen Fahrzeugsystemen oder Fahrassistenzsystemen einen dreidimensionalen Umgebungsinformation zu erhalten und dabei die vorhandenen Gegenstände und Menschen, sowie deren Entfernungsdaten zu erhalten. Auf diese Weise kann ein vorausschauendes Fahren erreicht werden. In der Praxis benötigt man für die Simulation im Rahmen beispielsweise der Qualitäts- und Funktionskontrolle aufwendige dreidimensionale Aufbauten, die zum einen teuer und zum anderen zeitintensiv im Rahmen der Funktions- und Qualitätskontrolle sind. Dabei hat es sich als vorteilhaft herausgestellt, dass in der Ebene des LiDAR- Lichtempfangssensors eine Lichtsenderleiste vorhanden ist. Diese Lichtsenderleiste verfügt über mehrere erste Lichtsender, die untereinander in Längsrichtung der Lichtsenderleiste angeordnet sind. In der Ebene des LiDAR-Lichtempfangssensors bedeutet hierbei, dass die Lichtsenderleiste und die in der Lichtsenderleiste angeordneten ersten Lichtsender derart angeordnet sind, dass sie in einem definierten Rotationspunkt des Lichtempfangssensors den gesamten Aufnahmebereich des Lichtempfangssensors abdecken.

Ausserdem ist eine weitere Lichtsenderleiste vorhanden, welche neben der Lichtsenderleiste in der Ebene des LiDAR- Lichtempfangssensors, also ebenfalls im Empfangsbereich des LiDAR-Lichtempfangssensors angeordnet ist.

Das Signal stellt regelmässig ein Lichtsignal dar. Das Lichtsignal wird bevorzugt von einer LED oder einer Laserdiode erzeugt. Die LED umfasst dabei einen LED-Treiber. Die Laserdiode wiederum umfasst einen Laserdioden-Treiber. Eine Laserdiode (auch Halbleiterlaser genannt) ist ein mit der Leuchtdiode (LED) verwandtes Halbleiter-Bauteil, das jedoch Laserstrahlung erzeugt. In Laserdioden wird ein p-n-Übergang mit starker Dotierung bei hohen Stromdichten betrieben. Die Wahl des Halbleitermaterials bestimmt dabei die emittierte Wellenlänge, wobei heute ein Spektrum von Infrarot bis Ultraviolett abgedeckt wird.

Die Lichtsenderleiste weist dabei, wie oben beschrieben eine Vielzahl von ersten Lichtsendern auf, wobei die weitere Lichtsenderleiste ebenfalls eine Vielzahl von weiteren Lichtsendern aufweist. In einem bevorzugten Ausführungsbeispiel weist die Lichtsenderleiste mindestens zwei untereinander in Längsrichtung angeordnete erste Lichtsender auf. Ebenso weist die weitere Lichtsenderleiste ebenfalls mindestens zwei untereinander in Längsrichtung angeordnete weitere Lichtsender aufweist.

Die Lichtsenderleiste und die weitere Lichtsenderleiste sind in einem Lichtleistenzylinder umfasst, wobei der Lichtleistenzylinder in der gleichen Ebene des LiDAR- Lichtempfangssensors, also im Empfangsbereich des LiDAR- Lichtempfangssensor angeordnet ist und dabei den rotierenden LiDAR-Lichtempfangssensor 360° umgreift. Dadurch ist eine lückenlose Belichtung des LiDAR- Lichtempfangssensor in jedem Rotationspunkt gewährleistet.

Weiter ist ein Rechner vorhanden, welcher den LiDAR- Lichtempfangssensor steuert. Der Rechner bestimmt das Einschalten des LiDAR-Lichtempfangssensors und koordiniert außerdem die Ansteuerung des ersten Lichtsenders und des weiteren Lichtsenders und somit auch die Zeitspanne zwischen dem Einschalten des Lichtempfangssensors und der beiden Lichtsender. Dabei registriert der Rechner auch, ob der Lichtempfangssensor richtig arbeitet und die verschiedenen Zeitspannen in entsprechende räumliche Entfernungen aufteilt. Währenddessen rotiert der LiDAR- Lichtempfangssensor entlang der Innenfläche des Lichtleistenzylinders und wird entweder von einzelnen Lichtsendern oder von allen Lichtsendern beispielsweise der einen Lichtsenderleiste belichtet.

Der Rechner dient dabei also dazu, dass die Freischaltung des Lichtempfangssensors und die Zeitspanne zur Abgabe eines Lichtsignals, sowie die Auswahl des gewünschten ersten Lichtsenders oder des weiteren Lichtsenders der weiteren Lichtsenderleiste überwacht und gesteuert wird, wobei der Signaleingang des Lichtsignals von dem ersten Lichtsender oder dem weiteren Lichtsender ebenfalls registriert wird.

In einem anderen bevorzugten Ausführungsbeispiel wird ein LiDAR-Lichtsignal eines LiDAR-Lichtgebers durch einen Verstärker, einen Komperator, ein Verzögerungsglied und einen LED-Treiber oder einen Laserdiode-Treiber eine LED oder einer Laserdiode in dem Lichtsender und/oder weiterem Lichtsender aktiviert. Dadurch bedarf es keiner separaten Lichtquellen mehr. Vielmehr kann das LiDAR-Lichtsignal je nach Bedarf und auch gewollter Zeitspanne zwischen Absenden und Empfangen in den Lichtsender oder den weiteren Lichtsender weitergeleitet werden. Dabei fällt beispielsweise dem Verzögerungsglied die Aufgabe zu, dass das abgesandte LiDAR-Lichtsignal erst nach einer definierten Zeit weitergegeben wird, um es an den Lichtempfangssensor wieder zurückzuleiten.

Weiter ist die Lichtsenderleiste und die weitere Lichtsenderleiste nebeneinander in dem statischen Lichtleistenzylinder in einem Umfang von bis zu 360°, zentrisch ausgerichtet zu einem Rotationskopf ausgerichtet, in welchem der LiDAR, Lichtempfangssensor aufgenommen ist. Neben der Lichtsenderleiste und der weiteren Lichtsenderleiste können eine unbestimmte Anzahl von anderen Lichtsenderleisten in gleicher Ebene nebeneinander angeordnet sein. Auf diese Weise kann ein möglichst vollständiges Abbild des zu detektieren Umfelds erreicht werden.

Weiter wird ein Verfahren zur Simulation einer Detektionsumgebung für einen rotierenden LiDAR, Lichtempfangssensor mit einer Lichtsenderleiste und einer weiteren Lichtsenderleiste, der neben der Lichtsenderleiste in gleicher Ebene angebracht ist, wobei jede der Lichtsenderleisten jeweils einen ersten Lichtsender und einen zweiten Lichtsender aufweist, gekennzeichnet durch folgende Schritte:
- der LiDAR, Lichtempfangssensor wird aktiviert
- einer oder mehrere der Lichtsender der Lichtsenderleiste gibt ein Lichtsignal nach einer definierten Zeit ab
- der LiDAR, Lichtempfangssensor registriert das Lichtsignal.

Weiter ist nach der Aktivierung oder einer weiteren Aktivierung des LiDAR,Lichtempfangssensors einer oder mehrere der Lichtsender der weiteren Lichtsenderleiste ein weiteres Lichtsignal abgibt.

Das LiDAR-Lichtsignal eines LiDAR-Lichtsignalgebers wird dabei durch einen Photodetector, einen Verstärker, einen Komperator und ein Verzögerungsglied in einen LED-Treiber oder Laserdioden-Treiber geleitet und der LED-Treiber anschliessend eine LED oder der Laserdioden-Treiber anschliessend eine Laserdiode in einem optischen System aktiviert.

Aufgrund der hohen Rotationsgeschwindigkeit des Rotationskopfes und der hohen Geschwindigkeit der ausgesandten und entsprechend auch empfangenen Lichtsignale hat es sich als vorteilhaft erwiesen, dass alle Lichtsenderleisten gemeinsam in einer definierten Weise ihre Lichtsignale abgeben. Auf diese Weise muss nicht aufwendig detektiert werden, in welcher Position sich der LiDAR-Lichtempfangssensor gerade befindet um die richtigen Lichtsenderleisten anzufahren.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Schaltdarstellung;
Figur 2 zeigt eine schematische Ansicht eines Teils der erfindungsgemässen Simulationsvorrichtung;
Figur 3 zeigt eine schematische Ansicht eines weiteren Teils der erfindungsgemässen Simulationsvorrichtung;
Figur 4 eine Draufsicht auf die erfindungsgemässe Simulationsvorrichtung.
Figuren 5 und 6 noch ein weiteres Ausführungsbeispiel

### Ausführungsbeispiel

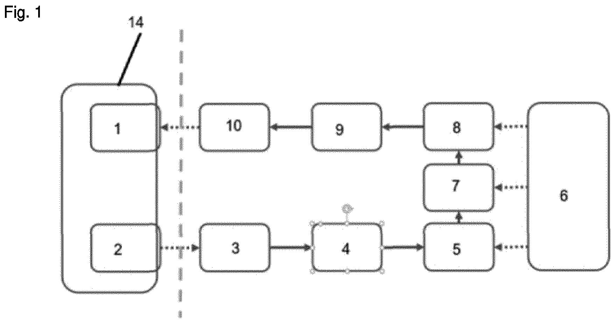

In Figur 1 ist eine schematische Schaltdarstellung für das Ausführungsbeispiel gezeigt, dass nicht nur ein LiDAR, Lichtempfangssensor 1 eines LiDAR, Lichmesssystem 14 genutzt wird, sondern auch ein LiDAR, Lichtsignalgeber 2.

In einem solchen Fall wird das ausgesandte LiDAR, Lichtsignal des LiDAR, Lichtsignalgebers 2 zunächst in einen Photodetector 3 geleitet. Als Photodetector, auch Lichtsensor oder optischer Detektor, optoelektronischer Sensor, werden elektronische Bauelemente bezeichnet, die Licht unter Benutzung des photoelektrischen Effekts in ein elektrisches Signal umwandeln oder einen von der einfallenden Strahlung abhängigen elektrischen Widerstand zeigen. Mit dem Begriff werden aber auch Applikationen benannt, die ein solches strahlungsmessendes Bauteil integriert haben.

Das vom Photodetector 3 aufgenommene Signal wird anschliessend in einen Verstärker 4 weitergeleitet, welcher das Signal aufwertet und für die weitere Verarbeitung verstärkt.

Danach wird das Signal in einen Komperator 5 weitergegeben. Dabei überwacht ein Rechner 6 den Komperator 5 und die Weitergabe des Signals an ein Verzögerungsglied 7, welches die Weitergabe des Signals an einen LED-Treiber 8 in definierter Form und beeinflusst vom Rechner 6 mit unterschiedlicher zeitlicher Verzögerung weitergibt.

Der LED-Treiber 8 oder ein nicht gezeigter Laserdioden-Treiber wiederum bringt eine LED 9 oder eine nicht gezeigte Laserdiode zur Abgabe des Signals in einem optischen System 10 zum Leuchten. Nachdem das Signal durch die LED 9 im optischen System 10 in ein Lichtsignal umgewandelt wurde, empfängt der LiDAR, Lichtempfangssensor 1 das Lichtsignal des optischen Systems 10.

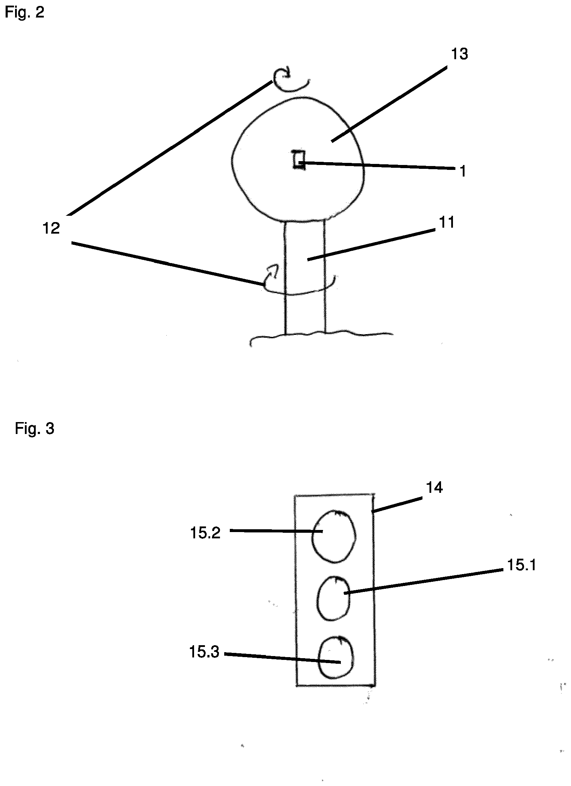

Figur 2 zeigt einen Rotationskopf 13, in welchem der LiDAR, Lichtempfangssensor 1 mitrotierend aufgenommen ist. Ausserdem ist eine Achse 11 gezeigt, auf welcher der Rotationskopf 13 aufsitzt.

Daneben zeigen die beiden Rotationspfeile 12 die Rotationsrichtung in diesem Ausführungsbeispiel.

In Figur 3 ist die Lichtsenderleiste 14 gezeigt. In der normalerweise zu dem Rotationskopf 13 zugewandten Seite der Lichtsenderleiste 14 ist gut zu erkennen, wie ein erster Lichtsender 15.1 angeordnet ist und wie zusätzliche andere erste Lichtsender 15.2, 15.3 unterhalb und oberhalb des zentralen ersten Lichtsenders 15.1 angeordnet sind.

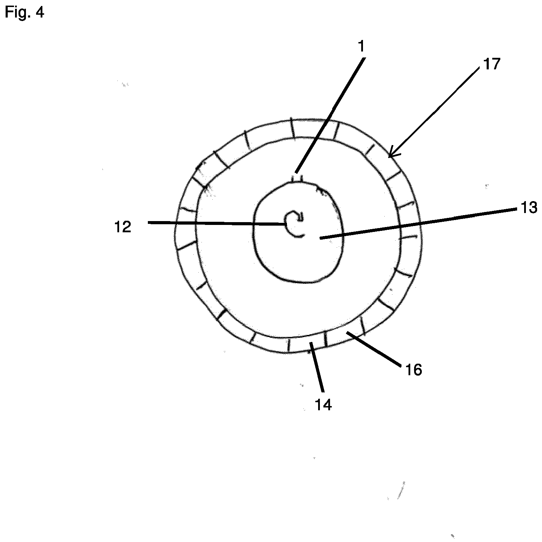

In Figur 4 ist eine Draufsicht auf eine erfindungsgemässe Simulationsvorrichtung gezeigt. Dort ist im Zentrum eines Lichtleistenzylinders 17 der Rotationskopf 13 gezeigt, welcher in Richtung des Rotationspfeils 12 rotiert.

Dabei besteht der Lichtleistenzylinder 17 aus der Lichtsenderleiste 14 und der weiteren Lichtsenderleiste 16 und weiteren nicht beschriebenen aber in der Figur 4 gezeigten Lichtsenderleisten, die gemeinsam den Kreis um den Rotationskopf 13 schliessen, um eine 360° - Umgebung simulieren zu können.

Obwohl nur eine/einige bevorzugte Ausführungsbeispiel/e der Erfindung beschrieben und dargestellt wurde/n, ist es offensichtlich, dass der Fachmann zahlreiche Modifikationen hinzufügen kann, ohne Wesen und Umfang der Erfindung zu verlassen.

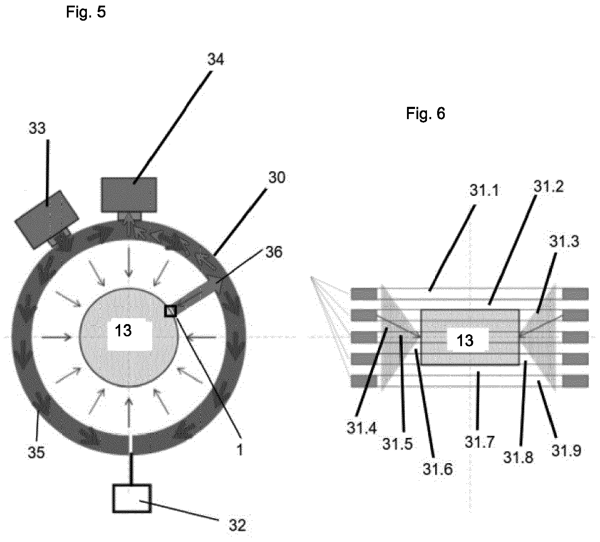

In den Figuren 5 und 6 ist ein weiteres Ausführungsbeispiel gezeigt. Dabei zeigt die Figur 5 die Ansicht von oben und die Figur 6 die geschnittene Seitenansicht. In den beiden Figuren ist wieder der Rotationskopf 13 gezeigt, welcher ebenfalls um 360° rotierend angeordnet ist.

Der Rotationskopf 13 ist in der Figur 5 von einem Lichtring 30 umgeben. Der Lichtring 30 kann in einem 3D-Druckverfahren aus Kunststoff hergestellt werden. Der Lichtring 30 besteht aus einer Vielzahl übereinanderliegender Ringe 31.1 - 31.9., welche voneinander lichtdicht abgeschirmt sind.

In der Figur 5 ist ausserdem eine Nullgradjustage 32 gezeigt. Bei Durchschreiten des Lichtempfangssensors 1 an der Nullgradjustage 32 wird dem Rechner das Signal des Durchschreitens der Nullgradjustage 32 mitgeteilt, sodass aufgrund der Rotationsgeschwindigkeit des Rotationskopfes 13 und dem Zeitpunkt des Durchschreitens der Nullgradjustage 32 immer die genaue Position des Lichtempfangssensors 1 ermittelbar ist. Folglich kann die Position des Lichtempfangssensors 1 in Abhängigkeit der vergangenen Zeit seit Passieren der Nullgradjustage 32, und der Rotationsgeschwindigkeit ermittelt werden. Dies ist gerade in Abhängigkeit davon möglich, wenn ein Sender 33 ein Senderlicht hier in Form des Senderlichtpfeils 35 abstrahlt, wobei sich das Senderlicht im gesamten Lichtring 30 ausbreitet und sichtbar ist für den Lichtempfangssensor 1. Bei der jeweiligen Position des Lichtempfangssensors 1 wird wiederum ein Empfängerrücksignal 36 abgesendet, welches von einem Empfänger 34 detektiert wird.

Auf diese Weise ist eine Detektion der Position und der Funktionstüchtigkeit des Lichtempfangssensors 1 ermittelbar.

### Bezugszeichenliste

| | |
|---|---|
| 1 | LiDAR-Lichtempfangssensor |
| 2 | LiDAR-Lichtsignalgeber |
| 3 | Photodetector |
| 4 | Verstärker |
| 5 | Komperator |
| 6 | Rechner |
| 7 | Verzögerungsglied |
| 8 | LED-Treiber |
| 9 | LED |
| 10 | Optisches System |
| 11 | Achse |
| 12 | Rotationsrichtung |
| 13 | Rotationskopf |
| 14 | Lichtsenderleiste |
| 15 | Erster Lichtsender |
| 16 | Weitere Lichtsendeleiste |
| 17 | Lichtleistenzylinder |
| | |
| | |
| | |
| 30 | Lichtring |
| 31 | Ring |
| 32 | Nullgradjustage |
| 33 | Sender |
| 34 | Empfänger |
| 35 | Senderlichtpfeil |
| 36 | Empfängerrücksignal |
| | |
| | |
| | |
| | |

## Patentansprüche

1. Simulationsvorrichtung mit einem rotierenden LiDAR-Lichtmesssystem mit einem LiDAR-Lichtsignalgeber (2) und einem LiDAR-Lichtempfangssensor (1), wobei der LiDAR-Lichtempfangssensor (1) 360° um eine Achse (11) rotiert,
**dadurch gekennzeichnet,**
**dass** in der Ebene des LiDAR-Lichtempfangssensors (1) im Empfangsbereich des LiDAR-Lichtempfangssensors (1) eine Lichtsenderleiste (14) und eine weitere Lichtsenderleiste (16) neben der Lichtsenderleiste in einem Lichtleistenzylinder (17) umfasst sind, wobei sich das LiDAR-Lichtmesssystem innerhalb des Lichtleistenzylinders befindet, wobei ein LiDAR-Lichtsignal des LiDAR-Lichtsignalgebers (2) durch einen Photodetector (3), einen Verstärker (4), einen Komperator (5), ein Verzögerungsglied (7), einen LED-Treiber (8) und eine LED (9) oder einen Laserdioden-Treiber und eine Laserdiode in einem ersten Lichtsender (15.1, 15.2, 15.3) der ersten Lichtsenderleiste (14) und/oder einem weiteren Lichtsender der weiteren Lichtsenderleiste (16) aktiviert.

2. Simulationsvorrichtung nach Anspruch 1, **dadurch gekennzeichnet, dass** die Lichtsenderleiste (14) mindestens zwei untereinander angeordnete erste Lichtsender (15.1, 15.2, 15.3) aufweist.

3. Simulationsvorrichtung nach Anspruch 1, **dadurch gekennzeichnet, dass** die weitere Lichtsenderleiste (16) mindestens zwei untereinander angeordnete weitere Lichtsender aufweist.

4. Simulationsvorrichtung nach einem der vorigen Ansprüche, **dadurch gekennzeichnet, dass** ein Rechner (6) vorhanden ist, welcher den LiDAR-Lichtempfangssensor (1) steuert.

5. Simulationsvorrichtung nach Anspruch 4, **dadurch gekennzeichnet, dass** der Rechner die Lichtsenderleiste (14) und die weitere Lichtsenderleiste (16) steuert und die umfassten ersten Lichtsensender (15.1, 15.2, 15.3) und weitere Lichtsender steuert.

6. Simulationsvorrichtung nach einem der Ansprüche 4 oder 5, **dadurch gekennzeichnet, dass** der Rechner die Freischaltung des LiDAR-Lichtempfangssensors (1) und die Zeitspanne zur Abgabe eines Lichtsignals über die Lichtsenderleiste (14) und/oder die weitere Lichtsenderleiste (16) überwacht und den Signaleingang des Lichtsignals von der aktivierten Lichtsenderleiste (14) oder der weiteren Lichtsenderleiste (16) registriert.

7. Simulationsvorrichtung nach einem der vorigen Ansprüche, **dadurch gekennzeichnet, dass** der erste Lichtsender (15.1, 15.2, 15.3) und/oder der weitere Lichtsender statisch in einer Halterung in einem Umfang von bis zu 360°, zentrisch zu einem Rotationskopf (13) ausgerichtet, in welchem der LiDAR-Lichtempfangssensor (1) umfasst ist.

8. Verfahren zur Simulation einer Detektionsumgebung mit einer Simulationsvorrichtung nach einem der Ansprüche 1, wobei jede der Lichtsenderleisten (14), (16) jeweils einen ersten Lichtsender (15.1, 15.2, 15.3) und einen weiteren Lichtsender aufweist, **gekennzeichnet durch** folgende Schritte:
- der LiDAR-Lichtempfangssensor (1) wird aktiviert
- nach dem Empfangen eines LiDAR-Lichtsignals des LiDAR-Lichtsignalgebers durch den Photodetector (3) gibt einer oder mehrere der Lichtsender (15.1, 15.2, 15.3) der Lichtsenderleisten (14) ein Lichtsignal nach einer definierten Zeit ab
- der LiDAR-Lichtempfangssensor (1) registriert das Lichtsignal

9. Verfahren nach Anspruch 8, **dadurch gekennzeichnet, dass** nach der Aktivierung oder einer weiteren Aktivierung des LiDAR-Lichtempfangssensors (1) einer oder mehrere der Lichtsender der weiteren Lichtsenderleiste ein weiteres Lichtsignal abgibt.

## Claims

1. Simulation apparatus with a rotating LiDAR light measurement system having LiDAR light transducer (2) and a LiDAR light reception sensor (1), wherein the LiDAR light reception sensor (1) rotates through 360° about a shaft (11),
**characterized in that**
a light transmitter strip (14) is present in the plane of the LiDAR light reception sensor (1) in the reception region of the LiDAR light reception sensor (1) and a further light transmitter strip (16) is present next to the light transmitter strip (14) in a light strip cylinder (17), wherein the LiDAR light measurement system is arranged within the light strip cylinder, wherein a LiDAR light signal from the LiDAR light transducer (2) is activated by a photodetector (3), an amplifier (4), a comparator (5), a retardation member (7), an LED driver (8) and a LED (9) or a laser diode driver and a laser diode in a first light transmitter (15.1, 15.2, 15.3) of the first light transmitter strip (14) and/or a further light transmitter of the further light transmitter strip (16).

2. Simulation apparatus according to claim 1, **characterized in that** the light transmitter strip (14) has at least two first light transmitters (15.1, 15.2, 15.3) that are arranged among themselves.

3. Simulation apparatus according to claim 1, **characterized in that** the further light transmitter strip (16) has at least two further light transmitters that are arranged among themselves.

4. Simulation apparatus according to any one of the preceding claims, **characterized in that** a computer (6), which controls the LiDAR light reception sensor (1), is present.

5. Simulation apparatus according to Claim 4, **characterized in that** the computer controls the light transmitter strip (14) and the further light transmitter strip (16) and controls the comprised first light transmitter (15.1, 15.2, 15.3) and further light transmitter.

6. Simulation apparatus according to either of claims 4 or 5, **characterized in that** the computer monitors the enablement of the LiDAR light reception sensor (1) and the time interval for emitting a light signal by way of the light transmitter strip (14) and/or the further light transmitter strip (16) and registers the signal input of the light signal from the activated light transmitter strip or the further light transmitter strip (16).

7. Simulation apparatus according to any one of the preceding claims, **characterized in that** the first light transmitter (15.1, 15.2, 15.3) and/or the further light transmitter are aligned statically in a holder in a circumference of up to 360°, centrically with respect to a rotation head (13) in which the LiDAR light reception sensor (1) is comprised.

8. Method for simulating a detection environment for a simulation apparatus according to any one of the claims 1 to 7, wherein each of the light transmitter strips (14, 16) has a first light transmitter (15.1, 15.2, 15.3) and a second light transmitter in each case, **characterized by** the following steps:
- the LiDAR light reception sensor (1) is activated,
- after the reception of a LiDAR light signal of the LiDAR light transducer through the photodetector (3), one or more of the light transmitters (15.1, 15.2, 15.3) of the light transmitter strip (14) emits a light signal after a defined time,
- the LiDAR light reception sensor (1) registers the light signal.

9. Method according to Claim 8, **characterized in that** one or more of the light transmitters of the further light transmitter strip emits a further light signal after the activation or a further activation of the LiDAR light reception sensor (1).

## Revendications

1. Dispositif de simulation avec un système de mesure de lumière LiDAR rotatif avec un générateur de signal lumineux LiDAR (2) et un capteur de réception de lumière LiDAR (1), dans lequel le capteur de réception de lumière LiDAR (1) tourne de 360° autour d'un axe (11),
**caractérisé par le fait que**
dans le plan du capteur de réception de lumière LiDAR (1) dans la zone de réception du capteur de réception de lumière LiDAR (1), une réglette émettrice de lumière (14) et une autre réglette émettrice de lumière (16) sont incluses en plus de la réglette émettrice de lumière dans un cylindre à réglettes lumineuses (17), le système de mesure de lumière LiDAR situé à l'intérieur du cylindre de barre lumineuse, où un signal lumineux LiDAR du générateur de signal lumineux LiDAR (2) active par un photo-détecteur (3), un amplificateur (4), un comparateur (5), un élément retardateur (7), un pilote de LED (8) et une LED (9) ou un pilote de diode laser et une diode laser dans un premier émetteur de lumière (15.1, 15.2, 15.3) de la première réglette émettrice de lumière (14) et/ou un autre émetteur de lumière de l'autre réglette émettrice de lumière (16).

2. Dispositif de simulation selon la revendication 1, **caractérisé par le fait que** la réglette émettrice de lumière (14) présente au moins deux premiers émetteurs de lumière (15.1, 15.2, 15.3) disposés l'un au-dessous de l'autre.

3. Dispositif de simulation selon la revendication 1, **caractérisé par le fait que** l'autre réglette émettrice de lumière (16) présente au moins deux autres émetteurs de lumière disposés l'un au-dessous de l'autre.

4. Dispositif de simulation selon l'une des revendications précédentes, **caractérisé par le fait qu'**il est présent un calculateur (6) qui commande le capteur de réception de lumière LiDAR (1).

5. Dispositif de simulation selon la revendication 4, **caractérisé par le fait que** l'ordinateur commande la réglette émettrice de lumière (14) et l'autre réglette émettrice de lumière (16) et commande les premiers émetteurs de lumière (15.1, 15.2, 15.3) et les autres émetteurs de lumière inclus.

6. Dispositif de simulation selon l'une des revendications 4 ou 5, **caractérisé par le fait que** l'ordinateur surveille l'activation du capteur de réception de lumière LiDAR (1) et la durée de l'émission d'un signal lumineux par l'intermédiaire de la réglette émettrice de lumière (14) et/ou de l'autre réglette émettrice de lumière (16) et enregistre l'entrée du signal lumineux provenant de la réglette émettrice de lumière (14) ou de l'autre réglette émettrice de lumière activée (16).

7. Dispositif de simulation selon l'une des revendications précédentes, **caractérisé par le fait que** le premier émetteur de lumière (15.1, 15.2, 15.3) et/ou l'autre émetteur de lumière est/sont inclus de manière statique dans un support de manière alignée jusqu'à une limite de 360°, de manière centrique par rapport à une tête rotative (13) dans laquelle est inclus le capteur de réception de lumière LiDAR (1).

8. Procédé de simulation d'un environnement de détection par un dispositif de simulation selon l'une des revendications 1, dans lequel chacune des réglettes émettrices de lumière (14), (16) présente respectivement un premier émetteur de lumière (15.1, 15.2, 15.3) et un autre émetteur de lumière, **caractérisé par** les étapes suivantes:
- le capteur de réception de lumière LiDAR (1) est activé,
- après réception d'un signal lumineux LiDAR du générateur de signal lumineux LiDAR par le photodétecteur (3), un ou plusieurs des émetteurs de lumière (15.1, 15.2, 15.3) des réglettes émettrices de lumière (14) émettent un signal lumineux après un laps de temps défini,
- le capteur de réception de lumière LiDAR (1) enregistre le signal lumineux.

9. Procédé selon la revendication 8, **caractérisé par le fait qu'**après l'activation ou une autre activation du capteur de réception de lumière LiDAR (1), un ou plusieurs des émetteurs de lumière de l'autre réglette émettrice de lumière émettent un autre signal lumineux.
